Europäisches Patentamt

European Patent Office

Office européen des brevets

(11) Veröffentlichungsnummer: **0 315 016 B1**

(12) **EUROPÄISCHE PATENTSCHRIFT**

(45) Veröffentlichungstag der Patentschrift: **22.12.93**

(21) Anmeldenummer: **88117698.6**

(22) Anmeldetag: **25.10.88**

(51) Int. Cl.5: **G11B 5/702**, G11B 5/70

(54) **Magnetischer Aufzeichnungsträger.**

(30) Priorität: **31.10.87 DE 3736998**

(43) Veröffentlichungstag der Anmeldung:
**10.05.89 Patentblatt 89/19**

(45) Bekanntmachung des Hinweises auf die
Patenterteilung:
**22.12.93 Patentblatt 93/51**

(84) Benannte Vertragsstaaten:
**DE FR GB NL**

(56) Entgegenhaltungen:
**EP-A- 0 195 675**

**DERWENT WORLD PATENT INDEX, vol. 84,
no. 31, week 31, 1984, access. no. 84-192467
(31), Derwent Publications Ltd, London
(GB)&NUM;**

**DERWENT WORLD PATENT INDEX, vol. 87,
no. 39, week 39, 1987, acess. no. 87-273454
(39), Derwent Publications Ltd, London
(GB)&NUM;**

(73) Patentinhaber: **BASF Aktiengesellschaft
Carl-Bosch-Strasse 38
D-67063 Ludwigshafen(DE)**

(72) Erfinder: **Lehner, August
Wachenheimer Strasse 4
D-6701 Roedersheim-Gronau(DE)**
Erfinder: **Kohl, Albert
Schloss-Strasse 26
D-6711 Laumersheim(DE)**
Erfinder: **Roller, Hermann
Schwedlerstrasse 118
D-6700 Ludwigshafen(DE)**
Erfinder: **Lenz, Werner, Dr.
Heinrich Baermann-Strasse 14
D-6702 Bad Dürkheim(DE)**
Erfinder: **Kreitner, Ludwig, Dr.
Liebigstrasse 10
D-6148 Heppenheim(DE)**
Erfinder: **Kopke, Helmut
Goethestrasse 11
D-6714 Weisenheim(DE)**
Erfinder: **Sommermann, Friedrich, Dr.
Grimmelshausenstrasse 9
D-7640 Kehl(DE)**
Erfinder: **Ricker, Ernst, Dr.
Kanalweg 1
D-7117 Bretzfeld-Geddelsbach(DE)**

**Beschreibung**

Die Erfindung betrifft magnetische Aufzeichnungsträger, bestehend aus einem nichtmagnetischen Trägermaterial und mindestens einer darauf haftfest aufgebrachten magnetisierbaren Schicht auf der Basis eines in einem mindestens zu 50 Gew.% aus einem Polyurethan bestehenden Bindemittel und weiteren üblichen Zusatzstoffen feinverteilten magnetischen Materials.

An magnetische Aufzeichnungsträger, die in modernen Audio- und Videoaufzeichnungs- und Wiedergabegeräten Anwendung finden, werden hohe Anforderungen bezüglich der Aufzeichnungs- und Wiedergabeeigenschaften gestellt. Daneben wird in gleichem Maße Wert auf hervorragende mechanische Eigenschaften, insbesondere bei der magnetisierbaren Schicht gelegt. Diese Schichten müssen sehr flexibel sein, eine hohe Elastizität und eine hohe Reißfestigkeit aufweisen. Außerdem wird, zur Vermeidung von Pegeleinbrüchen, zunehmend eine Verringerung der Reibungswerte, eine Erhöhung der Abrieb- und Verschleißfestigkeit sowie eine Verbesserung der Tropenfestigkeit gefordert. Um dies zu erreichen, wurde bereits vorgeschlagen (JP-A 62-189625), der Magnetschicht eine Mischung verzweigter Ester zuzusetzen. Nachteilig hierbei ist jedoch deren weichmachende Wirkung auf die schichtbildende Bindemittelmatrix.

Neben der mechanischen Festigkeit der magnetisierbaren Schicht ist noch eine geringe Rauhigkeit der Schichtoberfläche wichtig. Dadurch bedingt können aber thermoplastische Schichten schon bei 30 bis 60°C und hoher Luftfeuchtigkeit zum Verkleben neigen, wodurch die magnetischen Aufzeichnungsträger beim Betrieb blockieren und unbrauchbar werden. Diese Schwierigkeit ließe sich nur mit rauheren Oberflächen der magnetisierbaren Schicht und damit mit einem Verlust der Aufzeichnungsqualität beheben.

Zur Verminderung der Oberflächenrauhigkeit wurden bisher schon eine Reihe von Maßnahmen vorgeschlagen. So u.a. der Zusatz von Hydrophobierungsmitteln bei der Magnetdispersionsherstellung oder ein nachträgliches Aufbringen auf die magnetisierbare Schicht. Dabei werden bevorzugt solche herangezogen, die nach Möglichkeit nicht hydrophil sind oder durch Wassereinwirkung zum Kleben neigen. Auch die Erhöhung der Oberflächenhärte, z.B. durch Vernetzung mit Polyisocyanat oder durch Strahlungshärtung, wurde vorgeschlagen. Besonders häufig beschrieben und in Anwendung sind hierbei Systeme auf Basis von Polyurethanen und/oder Abmischungen dieser Polyurethane mit Polyisocyanaten die härtere Schichten ergeben und somit weniger thermoplastisch und mechanisch stabiler sein sollen.

Die Vielzahl der bisher vorgeschlagenen Maßnahmen zeigt oft erhebliche verfahrenstechnische Mängel und die gestellten Forderungen werden meist nur ungenügend bzw. teilweise erfüllt. Bei der Auswahl der bekannten Systeme bestand demnach jeweils das Ziel, durch Einzelmaßnahmen oder durch Kombination von mehreren Maßnahmen bzw. Verfahrensschritte Nachteile und Mängel, wie z.B. zu hohe Thermoplastizität, zu geringe Tropenfestigkeit, zu niedrige Abriebfestigkeit, zu frühe Pegeleinbrüche durch schlechte Dauerlaufeigenschaften usw. zu beheben oder doch zumindest in dem einen oder anderen Fall günstig zu beeinflussen. Für eine Optimierung besonders bei Verwendung unterschiedlicher Bindemittelsysteme reichten die bisher vorgeschlagenen Lösungen deshalb im Bezug auf Klimafestigkeit nur ungenügend aus.

Aufgabe der Erfindung war es deshalb, bei bekannten nach dem Stand der Technik hergestellten magnetischen Aufzeichnungsträgern, besonders bei den mit sehr feinteiligem magnetischen Material hergestellten, welche eine geringe Oberflächenrauhigkeit aufweisen, die Klimafestigkeit durch die Verwendung geeigneter Zusätze deutlich zu verbessern, ohne daß aber die magnetischen, mechanischen und Aufzeichnungs- bzw. Wiedergabeeigenschaften negativ beeinflußt werden.

Es wurde nun gefunden, daß bei einem magnetischen Aufzeichnungsträger, bestehend aus einem nichtmagnetischen Trägermaterial und mindestens einer darauf haftfest aufgebrachten magnetisierbaren Schicht auf der Basis eines in einem mindestens zu 50 Gew.% aus einem Polyurethan bestehenden Bindemittel und weiteren üblichen Zusatzstoffen feinverteilten magnetischen Materials sich die gestellte Aufgabe lösen läßt, wenn die magnetisierbare Schicht, bezogen auf die Menge an magnetisierbarem Material, 0,1 bis 2,0 Gew.% eines gesättigten 3 bis 10 Verzweigungsstellen aufweisenden Kohlenwasserstoffs mit 16 bis 40 Kohlenstoffatomen enthält.

Besondere geeignet sind gesättigte, 4 bis 8 Verzweigungsstellen aufweisende Polyisobutene mit 16 bis 32 Kohlenstoffatomen und insbesondere solche Polyisobutene, die zu mehr als 60% aus einem gesättigten 5 bis 7 Verzweigungsstellen aufweisenden Polyisobuten mit 22 bis 28 Kohlenstoffatomen bestehen. Ebenfalls geeignet sind die anderen den gestellten Bedingungen genügenden Isoparaffine, wie z. B. 1,3-Bis-isooctyl-cyclohexan.

Die im erfindungsgemäßen magnetischen Aufzeichnungsträger enthaltenen Zusatzstoffe zeichnen sich durch eine gute chemische und insbesondere Oxidationsbeständigkeit aus. Sie trocknen nicht aus, erstarren nicht und lassen sich lösen und emulgieren. Die zugesetzte Menge beträgt 0,1 bis 2,0 und insbesondere 0,1 bis 0,5 Gew.%, bezogen auf die Menge an magnetischem Material.

Aufbau und Herstellung der magnetischen Aufzeichnungsträger erfolgt in bekannter Weise.

Als magnetisches Material werden bevorzugt feinteiliges stäbchenförmiges Gamma-Eisen(III)oxid mit einer durchschnittlichen Teilchengröße von 0,1 bis 2 $\mu$m und insbesondere von 0,1 bis 0,9 $\mu$m oder stäbchenförmiges Chromdioxid der gleichen Teilchenstruktur, wie beim Eisenoxid angegeben, verwendet. Weitere geeignete Materialien sind Gamma-Eisen(III)oxid mit Dotierungen von Schwermetallen, insbesondere von Kobalt, sowie feinteilige Metallegierungen von Eisen, Kobalt und/oder Nickel. Besonders geeignet ist feinteiliges Chromdioxid.

Die die magnetisierbare Schicht bildenden Bindemittel bestehen zu mindestens 50 Gew.% aus Polyurethanen. Hierfür kommen beispielsweise lösungsmittelhaltige Polyurethanelastomere in Frage, wie sie z.B. in der DE-B 11 06 959 oder in der DE-B 27 53 694 beschrieben sind. Weitere geeignete Polyurethane sind in den DE-A 32 26 995, 32 27 163 und 32 27 164 offenbart. Die Polyurethane können dabei als alleinige Bindemittel oder vorzugsweise in Abmischungen mit anderen Polymeren (wie z.B. Polyvinylformale, Phenoxyharze, PVC-Copolymerisate) verwendet werden. Von der zweiten Bindemittelkomponente werden vorzugsweise 10 bis 40% zugesetzt. Bei diesen Bindemitteln ist es von besonderem Vorteil, daß ganz oder teilweise auf zusätzliche Dispergiermittel verzichtet werden kann.

Eine gegebenenfalls, je nach Bindemittelsystem und Bandeigenschaftsprofil, erforderliche Vernetzung der magnetischen Aufzeichnungsträger ist die Umsetzung der Polyurethane oder Polyurethanbindemittelgemische mit Polyisocyanaten. Für die Vernetzung kann eine Vielzahl organischer Di-, Tri- oder Polyisocyanate oder Isocyanatprepolymere bis zu einem Molgewicht von 10 000, vorzugsweise zwischen 500 und 3 000, verwendet werden. Bevorzugt sind Polyisocyanate, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- oder Triole oder durch Biuret- und Isocyanuratbildung entstehen, erwiesen. Besonders günstig ist ein Additionsprodukt von Toluylendiisocyanat an Trimethylolpropan und Diethylenglkyol. Die eingesetzte Menge an Polyisocyanat ist dabei dem jeweiligen Bindemittelsystem anzupassen.

Als Lösungsmittel werden je nach eingesetztem Bindemittel Wasser, cyclische Ether, wie Tetrahydrofuran und Dioxan und cyclische Ketone, wie Cyclohexanon, verwendet. Die Polyurethane sind auch in anderen stark polaren Lösungsmitteln, wie Dimethylformamid, N-Methylpyrrolidon, Dimethylsulfoxid oder Ethylglykolacetat löslich. Ebenso ist es möglich, die genannten Lösungsmittel mit Aromaten, wie Toluol oder Xylol und Estern, wie Ethyl- oder Butylacetat, zu mischen.

Den Dispersionen aus magnetischem Material und Bindemittel werden im allgemeinen weitere Zusatzstoffe zur Verbesserung der Magnetschicht zugesetzt. Beispiele solcher Zusätze sind Fettsäuren, Polycarbonsäuren, Mono-, Di- oder Polysulfonsäuren bzw. Phosphorsäuren, deren Gemische, Ester oder Salze mit Metallen der ersten bis vierten Gruppe im Periodensystem sowie Wachse, Lecithine, Siliconöle, Fluorcarbone, außerdem Füllstoffe, wie Ruß, Graphit, Quarzmehl und/oder nicht magnetisierbares Pulver auf Silicatbasis. Üblicherweise liegen solche Zusätze insgesamt unter 10 Gew.%, bezogen auf die Magnetschicht.

Der für die erfindungsgemäßen magnetischen Aufzeichnungsträger kennzeichnende Anteil an gesättigten, mehrfach verzweigten Kohlenwasserstoffen wird durch Zugabe dieser Substanzen vor oder unmittelbar nach der Dispergierung erreicht. Bevorzugt erfolgt jedoch die Zugabe vor der Dispergierung. Dadurch läßt sich die dispergierende Wirkung zusätzlich ausnutzen und eine gute und gleichmäßige Verteilung erreichen. Werden zum Aufbau der magnetisierbaren Schicht weitere an sich übliche Zusatzstoffe benutzt, die neben anderen Effekten, wie Verbesserung der Gleiteigenschaften und des Verlaufs, auch die Dispergierung begünstigen, so bleiben die vorteilhaften Eigenschaften durch die Zugabe des genannten Kohlenwasserstoffs dennoch erhalten.

Die Herstellung der magnetisierbaren Schichten erfolgt in bekannter Weise. Hierzu wird das magnetische Material mit dem verwendeten Bindemittel und ausreichend Lösungsmittel in einer Dispergiermaschine, z.B. einer Topfkugelmühle oder einer Rührwerkskugelmühle, unter Zusatz gegebenenfalls der weiteren Zusatzstoffe dispergiert. Zur Einstellung des zweckmäßigen Bindemittel-Pigment-Verhältnisses können diese der Mischung entweder in festem Zustand oder in Form von 10 bis 60%igen Lösungen bzw. 20 bis 60%igen Dispersionen zugegeben werden. Es hat sich als zweckmäßig erwiesen, die Dispergierung solange fortzuführen, bis eine extrem feine Verteilung des magnetischen Materials errreicht ist, was 1 bis 5 Tage erfordern kann. Durch anschließendes wiederholtes Filtrieren erhält man eine völlig homogene Magnetdispersion. Gegebenenfalls erforderliche Vernetzungsmittel werden vor der Beschichtung zur Dispersion gegeben.

Die Magnetdispersion wird nun mit Hilfe üblicher Beschichtungsmaschinen, z.B. mittels eines Linealgießers, auf den nichtmagnetischen Träger aufgetragen. Als nichtmagnetische Träger lassen sich die üblichen Trägermaterialien verwenden, insbesondere Folien aus linearen Polyestern, wie Polyethylenterephthalat, im allgemeinen in Stärken von 4 bis 200 $\mu$m und insbesondere von 6 bis 36 $\mu$m. Bevor die noch flüssige Beschichtungsmischung auf dem Träger getrocknet wird, was zweckmäßigerweise bei Temperaturen von 50 bis 100°C während 0,2 bis 5 Minuten geschieht, werden die anisotropen Magnetteilchen durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen, gegebenenfalls bei Anwendung von Druck und Temperaturen von 20 bis 100°C, vorzugsweise 40 bis 80°C, geglättet und verdichtet werden. Die Dicke der Magnetschicht beträgt im allgemeinen 1 bis 20 $\mu$m, vorzugsweise 2 bis 12 $\mu$m.

Die erfindungsgemäßen magnetischen Aufzeichnungsträger zeichnen sich durch verbesserte mechanische Eigenschaften unter Beibehaltung der guten Aufzeichnungs- und Wiedergabequalität aus. Hervorzuheben ist die verbesserte Verschleißfestigkeit und Tropenfestigkeit sowie die Vermeidung von Pegeleinbrüchen und das Verhindern des Blockierens der Aufzeichnungsträger.

Die Erfindung sei anhand folgender Beispiele uind Vergleichsversuche näher erläutert.

Beispiel 1

A. 108,75 g Toluylendiisocyanat, gelöst in 108 g Tetrahydrofuran wurden auf 60°C erhitzt und mit einem Tropfen Dibutylzinndilaurat versetzt. Dazu wurden innerhalb von 2,5 Stunden 150 g eines OH-gruppenhaltigen Polyesters aus Adipinsäure und Butandiol-1,4 mit einem Molekulargewicht von 1000 und 18,6 g Ethylenglykol und 4,47 g Trimethylolpropan, gelöst in 200 g Tetrahydrofuran gegeben. Nach einer Stunde wurde nochmals ein Tropfen Dibutylzinndilaurat zugegeben. Nach Erreichen eines NCO-Gehaltes von 1,78% wurde auf 45°C abgekühlt und danach 26,25 g Diethanolamin zugesetzt. Das resultierende Produkt wies einen Feststoffgehalt von 50%, eine OH-Zahl von 91 und einen K-Wert (2%ig in DMF) von 24 auf.

B. In einer Stahlkugelmühle mit einem Inhalt von 600 Volumenteilen, gefüllt mit 600 kg Stahlkugeln mit einem Durchmesser zwischen 4 und 6 mm, wurden 102 kg Tetrahydrofuran, 31 kg einer 50%igen Lösung des unter A genannten Polyharnstoffurethans, 100 kg eines ferromagnetischen Chromdioxids mit einer mittleren Nadellänge von 0,5 $\mu$m, 0,5 kg eines Polyisobutens mit 5 bis 7 Verzweigungsstellen und 24 bis 28 Kohlenstoffatomen, 2 kg Zinkstearat, 0,15 kg eines handelsüblichen Siliconöls sowie 0,5 kg N-Talgfett-1,3-diaminodioleat eingefüllt und der Ansatz 36 Stunden dispergiert. Die Dispersion wurde dann unter Druck filtriert und unmittelbar vor dem Auftragen auf eine 11,5 $\mu$m dicke Polyethylenterephthalatfolie unter Rühren mit, bezogen auf einen Teil der Dispersion, 0,039 Teilen einer 75%igen Lösung eines Triisocyanats auf 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 50 und 90°C getrocknet und durch Hindurchführen zwischen beheizten Walzen unter Druck (60°C, Liniendruck 200 kg/cm) geglättet.

Die Messung der remanenten Magnetisierung längs zu quer der magnetischen Vorzugsrichtung erfolgte in einem äußeren Meßfeld von 160 kA/m und ergab einen Richtfaktor von 3,0.

Nach dem Schneiden der beschichteten Folie in 3,81 mm breite Magnetbänder wurden folgende Tests durchgeführt:

Test 1

Die Oberflächenrauhigkeit wurde als gemittelte Rauhtiefe $R_Z$ (in $\mu$m) gemäß DIN 4768, Blatt 1, bestimmt.

Test 2

Die Bestimmung des Reibungskoeffizienten -Schicht/Stahl- erfolgte gemäß DIN 45 522, Blatt 1.

Test 3

Dynamische Reibung. Die Reibungszahl wird durch Messen einer Zugkraft bestimmt, die ein über eine sich mit einer Umfangsgeschwindigkeit von 9,5 cm/s drehende Meßtrommel geführtes Magnetband durch Reibung erzeugt. Die Meßtrommel ist eine Stahltrommel mit einer Oberflächenrauhigkeit von ca. 0,15 $\mu$m und einem Durchmesser von 70 mm. Das Bandstück ist 25 cm lang und wird bei einem Bandzug von 20 cN mit einer Geschwindigkeit von 1 mm/s und einem Umschlingungswinkel von 180°C über die Trommel geführt. Der Zug an der Meßdose F ist ein Maß für die Reibungszahl $\mu$, und zwar nach $\mu = \frac{1}{\pi} \cdot \ln\frac{F}{20}$.

Test 4

Pegelkonstanz. Die Prüfung der Pegelkonstanz erfolgt während 100 Durchläufen eines Prüfbandes auf das beim jeweiligen Arbeitspunkt des Bandes ein 8 kHz Signal aufgezeichnet ist. Angegeben wird die Anzahl der Durchläufe bis zum ersten Pegeleinbruch von größer 2 dB. Die Angabe 100 bedeutet kein Pegeleinbruch während des Tests.

Test 5

Klimatest. 10 mit Magnetband gefüllte Kassetten werden 4 Wochen bei 40°C und 93% rel. Feuchte gelagert und anschließend bei 30°C und 93% rel. Feuchte im Wiedergabebetrieb geprüft. Danach werden die Ablagerungen auf dem Löschkopf, dem Tonkopf und auf der Tonwelle visuell bewertet. Die Stärke der Ablagerungen werden in einer Notenskala (von Note 1: keine Ablagerung bis Note 6: sehr starke Ablagerung) festgehalten und der Mittelwert gebildet.

Test 6

Kreiden. Beim Kreiden werden drei Bandschleifen von je 840 mm Länge auf einem Laufwerk mit einer Bandgeschwindigkeit von 225 mm/s betrieben. Dabei wird das Band schichtseitig mit einem Bandzug von 50 cN über ein eingespanntes Papierstück mit definierter Oberflächenstruktur gezogen. Nach 75 Umläufen, bzw. 10 min ist die Messung beendet. Die Verfärbung des Papiers (Notenskala siehe Test 5) durch Bandabrieb ist ein Maß für die Abriebfestigkeit des Bandes.
Die Meßergebnisse sind in der Tabelle angegeben.

Vergleichsversuch 1

Es wurde wie in Beispiel 1 beschrieben verfahren, jedoch ohne Zusatz des Polyisobutens. Die Meßergebnisse sind in der Tabelle angegeben.

Beispiel 2

A. 53,1 g Toluylendiisocyanat und 75 g Diphenylmethyldiisocyanat, gelöst in 229 g Tetrahydrofuran wurden auf 60°C erhitzt und mit einem Tropfen Dibutylzinndilaurat versetzt. Dazu wurden innerhalb von 2,5 Stunden 250 g eines OH-gruppenhaltigen Polyesters aus Adipinsäure und Butandiol und 1,34 g Trimethylolpropan, gelöst in 200 g Tetrahydrofuran gegeben. Nach einer Stunde wurde nochmals ein Tropfen Dibutylzinndilaurat zugegeben. Nach Erreichen eines NCO-Gehaltes von 1,05% wurde auf 45°C abgekühlt und danach 22,05 g Diethanolamin zugesetzt. Das resultierende Produkt wies einen Feststoffgehalt von 50%, eine OH-Zahl von 55 und einen K-Wert (2%ig in DMF) von 30 auf.
B. Die Herstellung des magnetischen Aufzeichnungsträgers unter Einsatz des unter 2A genannten Polyurethans erfolgte wie in Beispiel 1 beschrieben.
Die Meßergebnisse sind in der Tabelle angegeben.

Vergleichsversuch 2

Es wurde wie in Beispiel 2 beschrieben verfahren, jedoch ohne Zusatz des Polyisobutens.
Die Meßergebnisse sind in der Tabelle angegeben.

Beispiel 3

A. In einem beheizbaren Reaktionsgefäß von 150 000 Volumenteilen Inhalt, ausgerüstet mit Rührer und Rückflußkühler, werden 6 600 Teile eines Polyesters aus Adipinsäure und Butandiol (Molekulargewicht 1 100), 730 Teile Butandiol, 80 Teile Trimethylolpropan, 3 862 Teile Diphenylmethan-4,4'-Diisocyanat in 26 000 Teilen Tetrahydrofuran gelöst und auf 55°C erwärmt. Die Komponenten werden bis zu einer Endviskosität von 25 Pas umgesetzt und anschließend mit 52 900 Teilen Tetrahydrofuran auf einen Feststoffgehalt von 12,5% verdünnt. Gleichzeitig wird die Reaktion durch Zugabe von 50 Teilen Dibutylamin gestoppt. Der K-Wert des gebildeten Polymeren beträgt 63, gemessen in 1%iger Lösung in Dimethylformamid.

B. In einer Stahlkugelmühle mit einem Füllvolumen von 100 000 Volumenteilen, die mit etwa 40 Umdrehungen pro Minute betrieben wird, wurden 100 000 Teile Stahlkugeln, 16 000 Teile der unter 3A angegebenen 12,5%igen Lösung des Polyurethanelastomeren, 10 000 Teile einer 10%igen Lösung eines Polyvinylformals, bestehend aus 82% Vinylformal-, 12% Vinylacetat- und 6% Vinylkalkoholeinheiten, 135 Teile N-Talgfett-1,3-diaminodioleat, 270 Teile Zinkstearat, 40 Teile eines Polyisobutens mit 5 bis 7 Verzweigungsstellen und 24 bis 28 Kohlenstoffatomen und 13 500 Teile eines ferromagnetischen Chromdioxidpigments mit einer mittleren Teilchengröße von 0,5 μm und einem Verhältnis von Länge zu Dicke von 4:1 bis 9:1 und 4 500 Teile Tetrahydrofuran eingefüllt und etwa 120 Stunden dispergiert. Die Magnetdispersion wurde sodann unter Druck durch einen Filter von 5 μm Porenweite filtriert. Mit einem Linealgießer wird nach der üblichen Technik eine 20 μm starke Polyäthylenterephthalatfolie mit der Magnetdispersion beschichtet und nach Durchlaufen eines Magnetfeldes die Beschichtung bei Temperaturen zwischen 60 und 100 °C getrocknet. Durch Hindurchführen zwischen beheizten Walzen (70 °C, Liniendruck 200 kg/cm) wurde die Magnetschicht verdichtet und geglättet. Die resultierende Dicke betrug 5 μm. Die beschichtete Folie wurde anschließend in Bänder von 3,81 mm Breite geschnitten.

Die Meßergebnisse sind in der Tabelle angegeben.

Vergleichsversuch 3

Es wurde wie in Beispiel 3 beschrieben verfahren, jedoch ohne Zusatz des Polyisobutens.

Die Meßergebnisse sind in der Tabelle angegeben.

**Tabelle**

| Test Nr. | Beispiel 1 | Beispiel 2 | Beispiel 3 | Vergleichsversuch 1 | Vergleichsversuch 2 | Vergleichsversuch 3 |
|---|---|---|---|---|---|---|
| 1 | 0,18 | 0,17 | 0,22 | 0,28 | 0,26 | 0,28 |
| 2 | 0,22 | 0,21 | 0,26 | 0,35 | 0,4 | 0,35 |
| 3 | 0,24 | 0,22 | 0,28 | 0,3 | 0,26 | 0,32 |
| 4 | 100 | 100 | 100 | 80 | 48 | 100 |
| 5 | 1,2 | 1,4 | 1,8 | 1,9 | 2,2 | 2,4 |
| 6 | 5 | 4 | 5 | 6 | 5 | 6 |

**Patentansprüche**

1. Magnetischer Aufzeichnungsträger, bestehend aus einem nichtmagnetischen Trägermaterial und mindestens einer darauf haftfest aufgebrachten magnetisierbaren Schicht auf der Basis eines in einem mindestens zu 50 Gew.% aus einem Polyurethan bestehenden Bindemittel und weiteren üblichen Zusatzstoffen feinverteilten magnetischen Materials, dadurch gekennzeichnet, daß die magnetisierbare Schicht, bezogen auf die Menge an magnetisierbarem Material, 0,1 bis 2,0 Gew.% eines gesättigten, 3 bis 10 Verzweigungsstellen aufweisenden Kohlenwasserstoffs mit 16 bis 40 Kohlenstoffatomen enthält.

2. Magnetischer Aufzeichnungsträger gemäß Anspruch 1, dadurch gekennzeichnet, daß die magnetisierbare Schicht, bezogen auf die Menge an magnetisierbarem Material, 0,1 bis 2,0 Gew.% eines gesättigten, 4 bis 8 Verzweigungsstellen aufweisenden Polyisobutens mit 16 bis 32 Kohlenstoffatomen enthält.

3. Magnetischer Aufzeichnungsträger gemäß Anspruch 2, dadurch gekennzeichnet, daß das Polyisobuten zu mehr als 60% aus einem gesättigten, 5 bis 7 Verzweigungsstellen aufweisenden Polyisobuten mit 22 bis 28 Kohlenstoffatomen besteht.

**Claims**

1. A magnetic recording medium, consisting of a non-magnetic substrate and at least one magnetizable layer which is firmly applied thereon and is based on a magnetic material finely distributed in a binder, consisting of at least 50% by weight of polyurethane, and further conventional additives, wherein the magnetizable layer contains from 0.1 to 2.0% by weight, based on the amount of magnetizable material, of a saturated hydrocarbon of 16 to 40 carbon atoms having from 3 to 10 branching points.

2. A magnetic recording medium as claimed in claim 1, wherein the magnetizable layer contains from 0.1 to 2.0% by weight, based on the amount of magnetizable material, of a saturated polyisobutene of 16 to 32 carbon atoms having from 4 to 8 branching points.

3. A magnetic recording medium as claimed in claim 2, wherein the polyisobutene consists of more than 60% of a saturated polyisobutene of 22 to 28 carbon atoms having from 5 to 7 branching points.

**Revendications**

1. Support d'enregistrements magnétique consistant en une matière de support non magnétique et, appliquée sur celle-ci et solidement adhérente, au moins une couche magnétisable à base d'une matière magnétique à l'état de fine division dans un liant consistant pour au moins 50 % en un polyuréthanne et d'autres additifs usuels, caractérisé en ce que la couche magnétisable, par rapport à la quantité de matière magnétisable, contient de 0,1 à 2,0 % en poids d'un hydrocarbure saturé en C16-C40 contenant 3 à 10 sites de ramification.

2. Support d'enregistrement magnétique selon la revendication 1, caractérisé en ce que la couche magnétisable, par rapport à la quantité de matière magnétisable, contient de 0,1 à 2,0 % en poids d'un polyisobutène saturé en C16-C32 contenant 4 à 8 sites de ramification.

3. Support d'enregistrement magnétique selon la revendication 2, caractérisé en ce que le polyisobutène consiste pour plus de 60 % en un polyisobutène saturé en C22-C28 contenant 5 à 7 sites de ramification.